# EUROPEAN PATENT SPECIFICATION

(11) **EP 3 224 704 B1**
(45) Date of publication and mention of the grant of the patent: **20.03.2019**
(21) Application number: 15863483.2
(22) Date of filing: 24.11.2015
(51) Int. Cl.: G06F 3/048, G06F 3/0488, G06F 17/24, G06K 9/00, G06K 9/22

(54) **METHOD AND DEVICE FOR AMENDING HANDWRITTEN CHARACTERS**
VERFAHREN UND VORRICHTUNG ZUM BERICHTIGEN VON HANDGESCHRIEBENEN ZEICHEN
PROCÉDÉ ET DISPOSITIF POUR MODIFIER DES CARACTÈRES MANUSCRITS

(30) Priority: 25.11.2014 KR 20140165497
(43) Date of publication of application: 04.10.2017
(73) Proprietor: Samsung Electronics Co., Ltd., Gyeonggi-do 16677 (KR)
(72) Inventor: LEE, Dong-hyuk, Seoul 06270 (KR); HWANG, Seong-taek, Pyeongtaek-si Gyeonggi-do 17720 (KR); KIM, Sang-ho, Hwaseong-si Gyeonggi-do 18430 (KR); LEE, Dong-chang, Suwon-si Gyeonggi-do 16461 (KR); LEE, Won-hee, Suwon-si Gyeonggi-do 16527 (KR); JUNG, Ho-young, Seoul 04110 (KR)
(74) Representative: Gulde & Partner
(86) International application number: PCT/KR2015/012656
(87) International publication number: WO 2016/085234

(56) References cited:
- CN-A- 103 824 072
- JP-A- 2006 277 224
- JP-A- 2007 316 754
- KR-A- 20140 089 915
- US-A1- 2009 116 744
- US-A1- 2013 311 880
- US-A1- 2014 086 489
- US-A1- 2014 245 137

## Description

### Technical Field

The present disclosure relates to a method and a device for amending a handwritten character in order to enhance readability thereof.

### Background Art

With developments in hardware technology, processing capabilities of devices have been enhanced, and various input units may be applied to the devices. Accordingly, a user may record memos related to various topics on a portable device. More particularly, a user is able to record a memo on a device as if writing on a sheet of paper, by using an input tool, such as a stylus pen. However, handwritten characters input by users through a stylus pen have different sizes, different inter-letter spaces, different inclinations, and the like, and thus may be hard to read. Thus, there is a demand for a technology capable of effectively providing more neatly-aligned handwritten characters to a user while maintaining the handwriting of the user.

The above information is presented as background information only to assist with an understanding of the present disclosure. No determination has been made, and no assertion is made, as to whether any of the above might be applicable as prior art with regard to the present disclosure.

US2014/245137 and JP 2007 316754A disclose the features of the precharacterizing portion of claim 1.

### Disclosure of Invention

### Solution to Problem

The invention is defined in the claims.

Aspects of the present disclosure are to address at least the above-mentioned problems and/or disadvantages and to provide at least the advantages described below. Accordingly, an aspect of the present disclosure is to provide methods and devices for effectively amending handwritten characters input by a user by using reference points of the handwritten characters.

Another aspect of the present disclosure is to provide methods and devices for effectively amending handwritten characters by using electronic characters having a similar font to that of the handwritten characters.

Another aspect of the present disclosure is to provide methods and devices for amending handwritten characters, whereby, according to a user input of selecting some or all of handwritten characters, the selected handwritten characters are aligned.

Additional aspects will be set forth in part in the description which follows and, in part, will be apparent from the description, or may be learned by practice of the presented embodiments.

### Brief Description of Drawings

The above and other aspects, features, and advantages of certain embodiments of the present disclosure will be more apparent from the following description taken in conjunction with the accompanying drawings, in which:
FIG. 1 illustrates a device amending a handwriting character input to the device according to an embodiment of the present disclosure;
FIG. 2 is a flowchart of a method, performed by a device, of aligning handwritten characters input to the device, according to various embodiments of the present disclosure;
FIG. 3 is a flowchart of a method, performed by a device, of aligning handwritten characters by using block areas corresponding to the handwritten characters, according to various embodiments of the present disclosure;
FIG. 4 is a flowchart of a method, performed by a device, of aligning handwritten characters based on centers of gravity of the handwritten characters, according to various embodiments of the present disclosure;
FIG. 5 is a flowchart of a method, performed by a device, of aligning handwritten characters by comparing locations of reference points of electronic characters with those of the handwritten characters, according to various embodiments of the present disclosure;
FIG. 6 illustrates strokes that constitute a handwritten character according to various embodiments of the present disclosure;
FIGS. 7A and 7B illustrate a reference point of a handwritten character according to various embodiments of the present disclosure;
FIGS. 8A to 8C illustrate a device aligning handwritten characters according to various embodiments of the present disclosure;
FIG. 9 is a flowchart of a method, performed by a device, of changing sizes, horizontal widths, and thicknesses of handwritten characters and aligning the handwritten characters, according to various embodiments of the present disclosure;
FIG. 10 is a flowchart of a method, performed by a device, of adjusting letter spacing of handwritten characters and spacing between words, according to various embodiments of the present disclosure;
FIGS. 11A to 11E illustrate a device changing sizes, horizontal widths, thicknesses, and letter spacing of handwritten characters according to various embodiments of the present disclosure;
FIG. 12 illustrates a device adjusting intervals between words recognized from handwritten characters according to various embodiments of the present disclosure;
FIG. 13 is a flowchart of a method, performed by a device, of changing line spacing and an indentation within a paragraph based on handwritten characters and changing a location of a drawing, according to various embodiments of the present disclosure;
FIG. 14 illustrates a device changing interline spacing according to various embodiments of the present disclosure;
FIG. 15 illustrates a device changing an indentation according to various embodiments of the present disclosure;
FIG. 16 is a flowchart of a method, performed by a device, of changing a location of a drawing, according to various embodiments of the present disclosure;
FIG. 17 is a flowchart of a method, performed by a device, of amending handwritten characters included in an area selected by a user from among handwritten characters input to the device, according to various embodiments of the present disclosure;
FIG. 18 is a flowchart of a method, performed by a device, of amending selected handwritten characters according to a way in which some from among handwritten characters input to the device are selected, according to various embodiments of the present disclosure;
FIG. 19 illustrates a device receiving a line selection input from a user of the device and performing line-by-line amendment on selected handwritten characters according to various embodiments of the present disclosure;
FIG. 20 illustrates a device receiving a box selection input from a user of the device and amending selected handwritten characters according to various embodiments of the present disclosure;
FIG. 21 illustrates a device selecting a drawing and changing a location of the drawing according to a user input according to various embodiments of the present disclosure; and
FIGS. 22 and 23 are block diagrams of a device according to various embodiments of the present disclosure.

Throughout the drawings, it should be noted that like reference numbers are used to depict the same or similar elements, features, and structures.

### Mode for Invention

The following description with reference to the accompanying drawings is provided to assist in a comprehensive understanding of various embodiments of the present disclosure as defined by the claims. It includes various specific details to assist in that understanding but these are to be regarded as merely exemplary. Accordingly, those of ordinary skill in the art will recognize that various changes and modifications of the various embodiments described herein can be made without departing from the scope of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

In embodiments of the present disclosure, when an element is referred to as being "connected" or "coupled" to another element, it can be directly connected or coupled to the other element, or can be electrically connected or coupled to the other element with intervening elements interposed therebetween. In addition, the terms "comprises" and/or "comprising" or "includes" and/or "including" when used in this specification, specify the presence of stated elements, but do not preclude the presence or addition of one or more other elements.

The present disclosure will now be described more fully with reference to the accompanying drawings, in which various embodiments of the disclosure are shown.

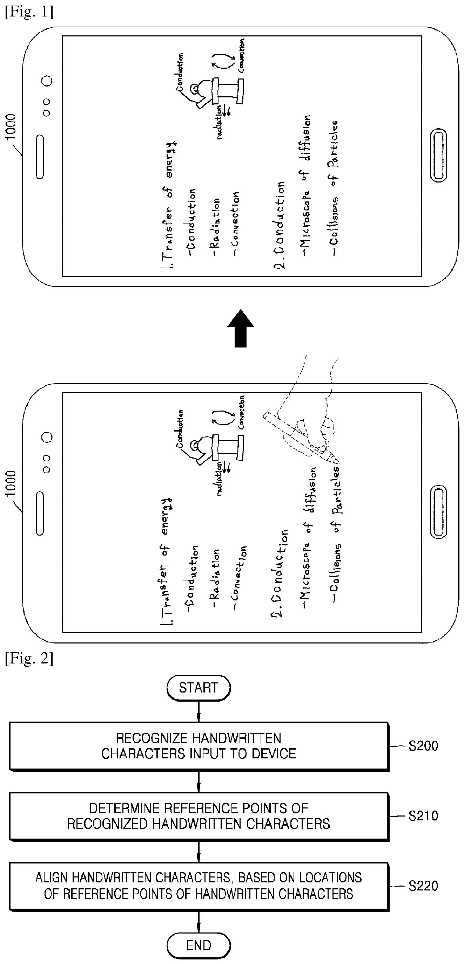

FIG. 1 illustrates a device amending a handwritten character input to the device according to various embodiments of the present disclosure.

Referring to FIG. 1, a user of a device 1000 may input handwritten characters to the device 1000, and the device 1000 may display the handwritten characters input by the user on a screen of the device 1000. Since the handwritten characters are characters manually written by the user, sizes, alignment, inter-letter spaces, and interline spaces of the handwritten characters may not be uniform. Thus, the device 1000 may determine a reference point for each of the handwritten characters, and change the size, shape, and location of each of the handwritten characters based on the determined reference point. Alternatively, the device 1000 may change the sizes, shapes, and locations of the handwritten characters by analyzing strokes that constitute the handwritten characters. The device 1000 may change the sizes, horizontal widths, and the like, of the handwritten characters input by the user and also change the letter spacing and the interline spacing of the handwritten characters, thereby aligning the handwritten characters. When the user draws a picture, a table, and the like together with the handwritten characters, the device 1000 may change the size, location, and the like, of the picture, the table, and the like.

Although a case where the user directly inputs the handwritten characters to the device 1000 has been described above, various embodiments are not limited thereto. For example, the user may input the handwritten characters to another device 1000, and the device 1000 may receive a document file including the input handwritten characters from the other device 1000.

Examples of the device 1000 may include, but are not limited to, a smartphone, a tablet personal computer (PC), a PC, a smart television (TV), a mobile phone, a personal digital assistant (PDA), a laptop, a media player, a micro-server, a global positioning system (GPS) device, an electronic book terminal, a digital broadcasting terminal, a navigation device, a kiosk, a moving picture experts group phase 1 or phase 2 (MPEG-1 or MPEG-2) audio layer 3 (MP3) player, a digital camera, and other mobile or non-mobile computing devices.

FIG. 2 is a flowchart of a method, performed by a device, of aligning handwritten characters input to the device, according to various embodiments of the present disclosure.

Referring to FIG. 2, in operation S200, the device 1000 may recognize the handwritten characters input to the device 1000. The device 1000 may distinguish the handwritten characters input to the device 1000 from one another. If the input handwritten characters partially overlap with each other, the device 1000 may remove the overlapping portions from the input handwritten characters and distinguish resultant handwritten characters from each other. The device 1000 may identify the types of the input handwritten characters and distinguish the handwritten characters from one another. The handwritten characters may be input by a user, and letter spacing of the handwritten characters may not be uniform and the handwritten characters may not be aligned.

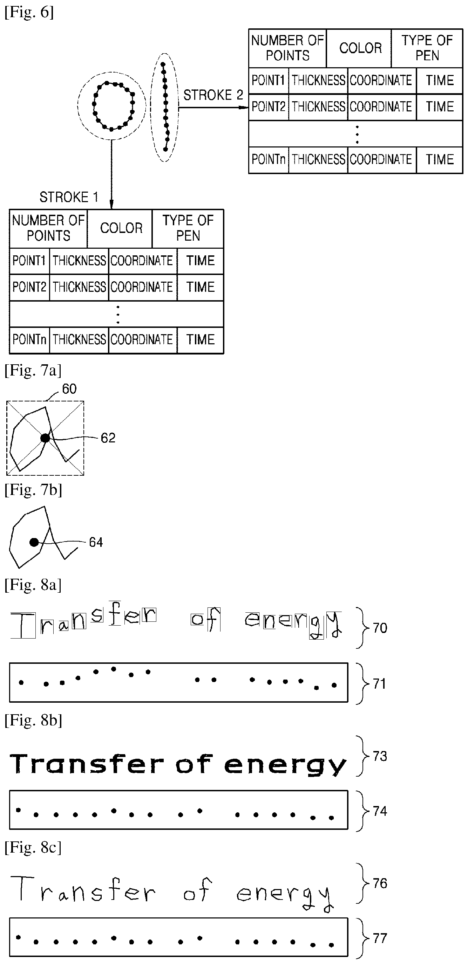

The device 1000 may recognize the input handwritten characters in units of characters. The device 1000 may recognize one character by identifying and analyzing at least one stroke that constitutes an input handwritten character. A stroke may be data that represents a plurality of points that are generated by a user input while a user touches down on, drags, and lifts off a screen by using an inputting tool or his or her hand. The colors, thicknesses, coordinates, and shapes of the plurality of points that constitute the stroke may be changed, and thus the handwritten character may be amended. Strokes that constitute a handwritten character will be described below with reference to FIG. 6.

The device 1000 may recognize a handwritten character by acquiring coordinate values of pixels that represent the handwritten character from among the pixels on a screen of the device 1000. In this case, the device 1000 may store the handwritten character as an image and identify a pixel from the stored image. However, various embodiments are not limited thereto.

In operation S210, the device 1000 may determine reference points of the recognized handwritten characters. For example, the device 1000 may determine a block area of a recognized handwritten character and determine a center point of the determined block area as a reference point of the recognized handwritten character. As another example, the device 1000 may calculate a center of gravity of a recognized handwritten character and determine, as a reference point of the recognized handwritten character, a point where the calculated center of gravity is positioned.

In operation S220, the device 1000 may align the handwritten characters, based on the locations of the reference points of the handwritten characters. The device 1000 may determine certain electronic characters that are to be compared with the handwritten characters, in order to align the handwritten characters. The electronic characters that are to be compared with the handwritten characters may be preset, or may be determined according to a selection input by a user. Alternatively, the device 1000 may determine a font that is similar to that of the handwritten characters, and determine electronic characters that have the determined font and have the same character values as the handwritten characters. However, various embodiments are not limited thereto.

The electronic characters may be, for example, characters that are the same as characters that are input through a keyboard of the device 1000 and displayed on the screen of the device 1000. The sizes, horizontal widths, letter spacing, interline spacing, and alignment of the electronic characters may be uniform. Electronic characters having various fonts may be previously stored in the device 1000.

The device 1000 may align or amend the handwritten characters by comparing reference points of the electronic characters with the reference points of the handwritten characters. The device 1000 may change the locations of the reference points of the handwritten characters such that the locations of the reference points of the handwritten characters are the same as those of reference points of the electronic characters when the electronic characters are aligned.

Although the device 1000 aligns or amends the handwritten characters by comparing the reference points of the electronic characters with the reference points of the handwritten characters in FIG. 2, various embodiments are not limited thereto. When the device 1000 recognizes strokes that constitute the handwritten characters, the device 1000 may identify the handwritten characters and align or amend the handwritten characters by using values that represent attributes of the strokes. Values that represent attributes of a stroke may include, for example, values regarding the colors, thicknesses, coordinates, and shapes of a plurality of points that constitute the stroke. The device 1000 may change the colors, thicknesses, coordinates, and shapes of the plurality of points that constitute the stroke, by analyzing the plurality of points that constitute the stroke. The device 1000 may allow the handwritten characters to appear to be input by a single inputting tool (e.g., a pen or a brush), by amending the plurality of points included in the stroke such that the colors, thicknesses, and shapes thereof are similar to or the same as each other. The device 1000 may allow the handwritten characters to have the same font or similar fonts, by changing the positions of the plurality of points included in the stroke, and may neatly align the handwritten characters in a line. As such, the device 1000 may align or amend the handwritten characters formed of strokes, the handwritten characters input by a user may be regularly aligned, and the input handwritten characters may have a uniform font.

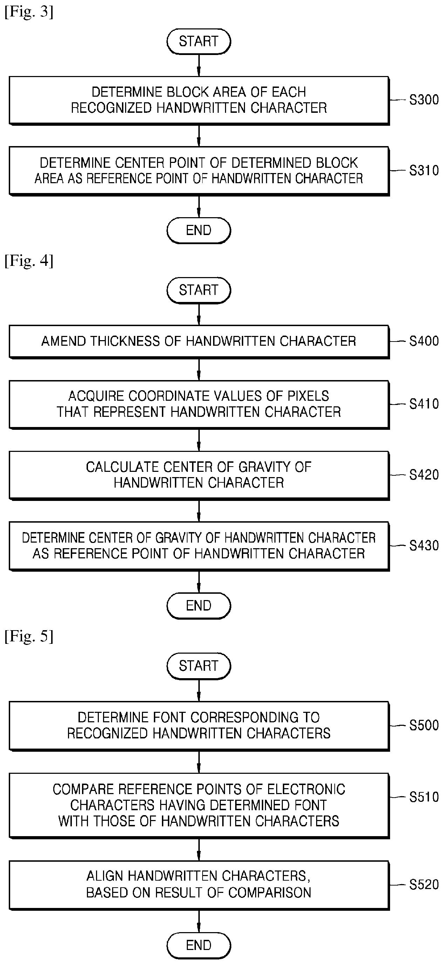

FIG. 3 is a flowchart of a method, performed by a device, of aligning handwritten characters by using block areas corresponding to the handwritten characters, according to various embodiments of the present disclosure.

Referring to FIG. 3, in operation S300, the device 1000 may determine a block area of each recognized handwritten character. The block area of the handwritten character may be a rectangular area including the handwritten character, and the device 1000 may determine the block area of the handwritten character according to a preset criterion. For example, the device 1000 may determine the block area of the handwritten character such that the block area has a smallest possible size while still including the handwritten character therein. As another example, the device 1000 may determine the block area of the handwritten character based on the inclination, center of gravity, and the like, of the handwritten character. However, various embodiments are not limited thereto.

In operation S310, the device 1000 may determine a center point of the determined block area as a reference point of the handwritten character. For example, the device 1000 may determine an intersection between diagonal lines of the determined block area, as the reference point of the handwritten character. However, various embodiments are not limited thereto.

Although a case where the device 1000 determines the reference point of the handwritten character based on the block area thereof has been described above, various embodiments are not limited thereto. For example, the device 1000 may determine the reference point of a handwritten character based on not only the block area of the handwritten character but also, for example, a font corresponding to the handwritten character and an error between the handwritten character and an electronic character corresponding to the handwritten character.

FIG. 4 is a flowchart of a method, performed by a device, of aligning handwritten characters based on centers of gravity of the handwritten characters, according to various embodiments of the present disclosure.

Referring to FIG. 4, in operation S400, the device 1000 may amend the thickness of a handwritten character. Since the handwritten character has been input by a user, the thicknesses of strokes of the handwritten character may not be uniform. Accordingly, the device 1000 may uniformly amend the thicknesses of the strokes of the handwritten character. In this case, various criteria may be set to amend the thickness of the handwritten character.

In operation S410, the device 1000 may acquire coordinate values of pixels that represent the handwritten character. The device 1000 may identify the pixels representing the handwritten character from among the pixels on the screen of the device 1000, and acquire coordinate values of the identified pixels.

In operation S420, the device 1000 may calculate a center of gravity of the handwritten character. For example, the device 1000 may calculate an average value of the acquired coordinate values and determine a point represented by the calculated average value as the center of gravity of the handwritten character.

In operation S430, the device 1000 may determine the center of gravity of the handwritten character as a reference point of the handwritten character.

Although a case where the device 1000 first performs operation S400 in order to calculate the center of gravity of a handwritten character has been described above, various embodiments are not limited thereto. The device 1000 may skip operation S400.

FIG. 5 is a flowchart of a method, performed by a device, of aligning handwritten characters by comparing locations of reference points of electronic characters with those of the handwritten characters, according to various embodiments of the present disclosure.

Referring to FIG. 5, in operation S500, the device 1000 may determine a font corresponding to recognized handwritten characters. The device 1000 may determine a font that is similar to those of the handwritten characters, by comparing the shapes of the handwritten characters with the shapes of electronic characters having various fonts. For example, the device 1000 may determine a font that is similar to that of each of the handwritten characters, and determine, as the font corresponding to the recognized handwritten characters, a font that is similar to that of a largest number of handwritten characters from among the recognized handwritten characters. However, various embodiments are not limited thereto.

In operation S510, the device 1000 may compare reference points of electronic characters having the determined font with those of the handwritten characters. The device 1000 may line up electronic characters having the determined font and having the same character values as those of the handwritten characters, and acquire a collection of reference points of the lined-up electronic characters. A collection of arranged reference points may be a portion or all of an array of the reference points. Alternatively, the collection of the arranged reference points may be a collection of reference points lined up along a single line or at least two lines. However, various embodiments are not limited thereto.

The device 1000 may compare locations of the reference points of the electronic characters included in the reference point collection of the lined-up electronic characters, with locations of the reference points of the handwritten characters included in a reference point collection of the handwritten characters. For example, when a font corresponding to handwritten characters "Transfer" is a font 'Arial', the device 1000 may line up electronic characters "Transfer" having the font 'Arial' and acquire a collection of reference points of the lined-up electronic characters "Transfer". The device 1000 may compare locations of reference points included in the collection of the reference points of the handwritten characters "Transfer", with locations of reference points included in the collection of the reference points of the lined-up electronic characters "Transfer".

In operation S520, the device 1000 may align the handwritten characters, based on a result of the comparison performed in operation S510. For example, the device 1000 may align the handwritten characters "Transfer" such that the locations of the reference points included in the collection of the reference points of the handwritten characters "Transfer" are the same as those of the reference points included in the collection of the reference points of the lined-up electronic characters "Transfer". Accordingly, the device 1000 may amend alignment, letter spacing, and word spacing of the handwritten characters and neatly align the handwritten characters.

FIG. 6 illustrates strokes that constitute a handwritten character according to various embodiments of the present disclosure.

Referring to FIG. 6, the handwritten character according to various embodiments may include a stroke 1 and a stroke 2. The device 1000 may acquire information about the attributes of points that constitute the stroke 1 and points that constitute the stroke 2. For example, the device 1000 may identify the number of points that constitute the stroke 1 and the colors of the points, and generate information about the thicknesses of the points, the coordinate values thereof, and the time at which each of the points is input. For example, the device 1000 may identify the number of points that constitute the stroke 2 and the colors of the points, and generate information about the thicknesses of the points, the coordinate values thereof, and the time at which each of the points is input. The device 1000 may also generate information about a writing tool by which the handwritten character appears to be written on the screen of the device 1000, based on a shape formed by the points included in the stroke 1 and a shape formed by the points included in the stroke 2.

Although two strokes form a single handwritten character in FIG. 6, various embodiments are not limited thereto. One stroke may form a single handwritten character, or at least three strokes may form a single handwritten character.

FIGS. 7A and 7B illustrate a reference point of a handwritten character according to various embodiments of the present disclosure.

Referring to FIG. 7A, the device 1000 may determine a reference point of a handwritten character, based on a block area of the handwritten character. For example, the device 1000 may determine a block 60 of a handwritten character "a". The device 1000 may determine as the block 60 a block that has the smallest possible size while still including the handwritten character "a". The device 1000 may also determine an intersection 62 between two diagonal lines of the block 60, as a reference point of the handwritten character "a".

Referring to FIG. 7B, the device 1000 may determine a center of gravity of the handwritten character as a reference point of the handwritten character. For example, the device 1000 may acquire a center of gravity 64 of the handwritten character "a" by calculating an average value of the coordinate values of pixels that represent the handwritten character "a". In this case, the device 1000 may amend the thickness of a stroke of the handwritten character "a" and calculate a center of gravity of the handwritten character "a". The device 1000 may determine the center of gravity 64 of the handwritten character "a" as the reference point of the handwritten character "a".

FIGS. 8A to 8C illustrates a device aligning handwritten characters according to various embodiments of the present disclosure.

Referring to FIG. 8A, non-aligned handwritten characters 70, and an array 71 of reference points of the non-aligned handwritten characters 70 is illustrated. Referring to FIG. 8A, the device 1000 may determine a block of the handwritten characters 70. The device 1000 may acquire the array 71 of the reference points of the handwritten characters 70 by determining center points of the determined block as the reference points of the handwritten characters 70.

Referring to FIG. 8B, electronic characters 73 that have a font corresponding to the non-aligned handwritten characters 70 and the same character values as those of the non-aligned handwritten characters 70, and an array 74 of reference points of the electronic characters 73 is illustrated. Referring to FIG. 8B, the electronic characters 73 may be characters having a similar font to that of the non-aligned handwritten characters 70. The device 1000 may acquire the array 74 of the reference points of the electronic characters 73 by lining up the reference points of the electronic characters 73.

Referring to FIG. 8C, aligned handwritten characters 76, and an array 77 of reference points of the aligned handwritten characters 76 are illustrated. Referring to FIG. 8C, the device 1000 may generate the array 77 by comparing the array 71 with the array 74 and changing the locations of the reference points included within the array 71 to be identical with the locations of the reference points included within the array 74. The device 1000 may acquire the aligned handwritten characters 76 by aligning the non-aligned handwritten characters 70 according to the locations of the reference points included within the array 77.

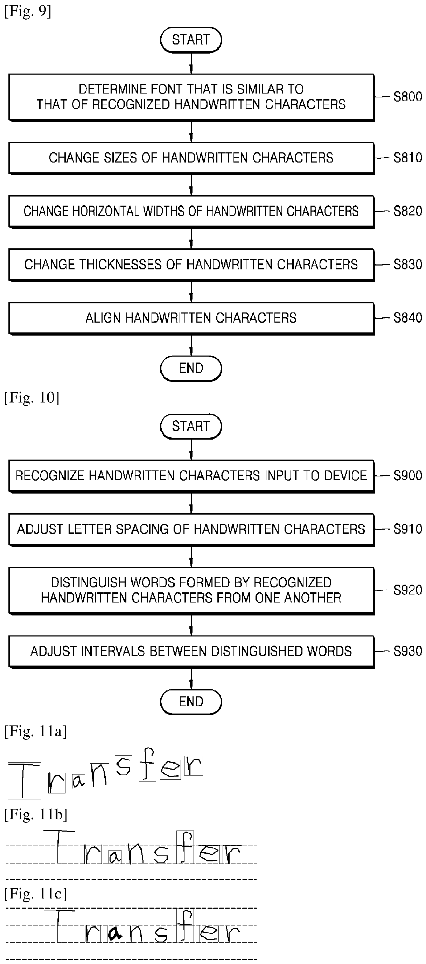

FIG. 9 is a flowchart of a method, performed by a device, of changing sizes, horizontal widths, and thicknesses of handwritten characters and aligning the handwritten characters, according to various embodiments of the present disclosure.

Referring to FIG. 9, in operation S800, the device 1000 may determine a font that is similar to that of recognized handwritten characters. The device 1000 may determine a font that is similar to those of the handwritten characters, by comparing the shapes of the handwritten characters with the shapes of electronic characters having various fonts. For example, the device 1000 may determine a font that is similar to that of each of the handwritten characters, and determine, as the font corresponding to the recognized handwritten characters, a font that is similar to that of a largest number of handwritten characters from among the recognized handwritten characters. However, various embodiments are not limited thereto.

In operation S810, the device 1000 may change the sizes of the handwritten characters. Since the handwritten characters have been input by a user, the sizes of the handwritten characters may not be uniform. Accordingly, the device 1000 may uniformly change the sizes of the handwritten characters according to a preset criterion. In this case, the device 1000 may enlarge or shrink the handwritten characters, based on the sizes of electronic characters having a font that is similar to that of the handwritten characters. For example, when the device 1000 identifies strokes that constitute a handwritten character, the device 1000 may enlarge or shrink the handwritten character by changing locations of points included in the strokes that constitute the handwritten character. In this case, locations to which the locations of the points included in the strokes are changed may be determined according to the shape of the handwritten character constituted by the strokes. For example, the device 1000 may add certain points to the strokes that constitute the handwritten character, while enlarging the handwritten character. As another example, the device 1000 may delete some of the points included in the strokes that constitute the handwritten character, while shrinking the handwritten character.

In operation S820, the device 1000 may change the horizontal widths of the handwritten characters. The device 1000 may change the horizontal widths of enlarged or shrunk handwritten characters by comparing the enlarged or shrunk handwritten characters with electronic characters corresponding to the handwritten characters. For example, the device 1000 may change the size of a horizontal width of a handwritten character such that a ratio of the horizontal width of the handwritten character to a height thereof is identical with a ratio of a horizontal width of an electronic character corresponding to the handwritten character to a height thereof.

For example, when the device 1000 identifies strokes that constitute a handwritten character, the device 1000 may change the size of the horizontal width of the handwritten character by changing locations of points included in the strokes that constitute the handwritten character. For example, the device 1000 may add certain points to the strokes that constitute the handwritten character, while enlarging the horizontal width of the handwritten character. As another example, the device 1000 may delete some of the points included in the strokes that constitute the handwritten character, while shrinking the horizontal width of the handwritten character.

Although a case where the device 1000 changes the size of a handwritten character and changes the horizontal width of the handwritten character has been described above, various embodiments are not limited thereto. The device 1000 may change the horizontal width of the handwritten character while simultaneously enlarging or shrinking the handwritten character.

In operation S830, the device 1000 may change the thicknesses of the handwritten characters. As the sizes or horizontal widths of the handwritten characters are changed, the stroke thicknesses of the handwritten characters may be changed. Accordingly, the device 1000 may change the thicknesses of the handwriting characters to be uniform. In this case, various criteria may be set to change the thicknesses of the handwritten characters. For example, the device 1000 may calculate an average value of the thicknesses of the handwritten characters whose sizes or horizontal widths have not yet been changed, and change the thicknesses of the handwritten characters whose sizes or horizontal widths have been changed, according to the calculated average value. Alternatively, the device 1000 may calculate an average value of the thicknesses of the handwritten characters whose sizes or horizontal widths have been changed, and change the thicknesses of the handwritten characters whose sizes or horizontal widths have been changed, according to the calculated average value. However, various embodiments are not limited thereto, and the device 1000 may adjust the thicknesses of the handwritten characters in consideration of, for example, the sizes of the handwritten characters, interline spacing thereof, and the size of a paragraph.

For example, when the device 1000 identifies strokes that constitute a handwritten character, the device 1000 may change the thickness of the handwritten character by changing thicknesses of points included in the strokes that constitute the handwritten character.

Although a case where the device 1000 changes the thickness of a handwritten character after changing the size and the horizontal width of the handwritten character has been described above, various embodiments are not limited thereto. For example, the thicknesses of the handwritten characters may not be uniform according to the sizes of pressures applied by a writing tool or a hand to the screen of the device 1000 while the handwritten characters are being input. In this case, the device 1000 may change the thicknesses of the handwritten characters without changing the sizes and horizontal widths of the handwritten characters. In this case, various criteria may be set to change the thicknesses of the handwritten characters. For example, the device 1000 may change the thickness of a handwritten character by uniformly changing the thicknesses of points, which are included in strokes that constitute the handwritten character, to a preset value. For example, the device 1000 may change the thicknesses of the handwritten characters to be uniform. However, various embodiments are not limited thereto.

In operation S840, the device 1000 may align the handwritten characters. The device 1000 may determine reference points of the handwritten characters whose sizes, horizontal widths, and thicknesses have been changed, and acquire electronic characters corresponding to the handwritten characters whose sizes, horizontal widths, and thicknesses have been changed. The device 1000 may align the handwritten characters whose sizes, horizontal widths, and thicknesses have been changed, by comparing the reference points of the acquired electronic characters with the determined reference points of the handwritten characters whose sizes, horizontal widths, and thicknesses have been changed.

Although the device 1000 aligns handwritten characters by comparing the handwritten characters with electronic characters in FIGS. 8A to 8C, various embodiments are not limited thereto. The device 1000 may change shapes, thicknesses, and letter spacing of the handwritten characters according to a preset criterion without comparing the handwritten characters with certain electronic characters.

Although the device 1000 compares arrays included in a single line with one another in FIGS. 8A to 8C, various embodiments are not limited thereto. The device 1000 may compare arrays respectively included in a plurality of lines with one another.

FIG. 10 is a flowchart of a method, performed by a device, of adjusting letter spacing of handwritten characters and spacing between words, according to various embodiments of the present disclosure.

Referring to FIG. 10, in operation S900, the device 1000 may recognize handwritten characters input to the device 1000. The device 1000 may distinguish the handwritten characters input to the device 1000 from one another. The device 1000 may identify the types of the input handwritten characters and distinguish the handwritten characters from one another. The handwritten characters may be input by a user, and letter spacing of the handwritten characters may not be uniform and the handwritten characters may not be aligned.

In operation S910, the device 1000 may adjust letter spacing of the handwritten characters. The device 1000 may adjust the letter spacing of the handwritten characters according to a space between electronic characters corresponding to the handwritten characters. The device 1000 may adjust spaces between reference points of the handwritten characters in accordance with spaces between reference points of the electronic characters corresponding to the handwritten characters. However, various embodiments are not limited thereto, and the device 1000 may change spacing of the handwritten characters according to a preset criterion without comparing the handwritten characters with certain electronic characters. For example, the device 1000 may calculate an average value of the spaces between the handwritten characters, and change the spaces between the handwritten characters to be uniform according to the calculated average value. A criterion for changing intervals between handwritten characters may be variously set according to the shapes, sizes, identification values, and the like, of the handwritten characters.

In operation S920, the device 1000 may distinguish words formed by the recognized handwritten characters from one another. The device 1000 may distinguish the words formed by the recognized handwritten characters from one another, based on letter spacing of the recognized handwritten characters. In this case, the device 1000 may identify the types of the input handwritten characters and distinguish the words by using dictionary information corresponding to the identified types of the handwritten characters.

In operation S930, the device 1000 may adjust intervals between the distinguished words. The device 1000 may adjust word spacing between the distinguished words.

FIGS. 11A to 11E illustrate a device changing sizes, horizontal widths, thicknesses, and letter spacing of handwritten characters according to various embodiments of the present disclosure. In FIGS. 11A to 11D, the device 1000 may acquire electronic characters corresponding to the handwritten characters and amend the handwritten characters based on the sizes, letter spacing, and a reference point array of the electronic characters.

Referring to FIGS. 11A and 11B, the device 1000 may align the handwritten characters by adjusting alignment of the handwritten characters by using blocks of the handwritten characters.

Referring to FIG. 11C, the device 1000 may change the sizes of the handwritten characters to be uniform according to a preset criterion. Accordingly, a handwritten character "a" may be thicker than the other handwritten characters.

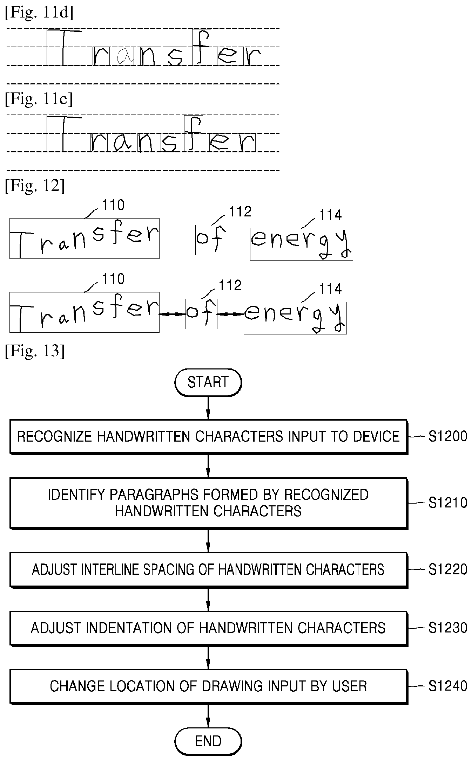

Referring to FIG. 11D, the device 1000 may change the thickness of the handwritten character "a" (100) to be identical with those of the other handwritten characters.

Referring to FIG. 11E, the device 1000 may adjust letter spacing of the handwritten characters.

FIG. 12 illustrates a device adjusting intervals between words recognized from handwritten characters according to various embodiments of the present disclosure.

Referring to FIG. 12, the device 1000 may identify words 110, 112, and 114 formed by the handwritten characters, and adjust an interval between the words 110 and 112 and an interval between the words 112 and 114. In this case, the device 1000 may identify the words 110, 112, and 114 by using dictionary information corresponding to the types of the handwritten characters. The device 1000 may adjust the interval between the words 110 and 112 and the interval between the words 112 and 114 based on the sizes of the handwritten characters. In this case, based on the sizes and shapes of electronic characters corresponding to the handwritten characters, the handwritten characters may be amended, or spacing between the words formed by the handwritten characters may be adjusted.

Although a case where spacing of the words 110, 112, and 114 formed by the handwritten characters is adjusted when the sizes, thicknesses, and letter spacing of the handwritten characters are not changed and the handwritten characters are not aligned has been described with reference to FIG. 12, various embodiments are not limited thereto. For example, the spacing of the words 110, 112, and 114 formed by the handwritten characters may be adjusted when at least one selected from the sizes, thicknesses, and letter spacing of the handwritten characters is changed or the handwritten characters are aligned.

FIG. 13 is a flowchart of a method, performed by a device, of changing line spacing and an indentation within a paragraph based on handwritten characters and changing a location of a drawing, according to various embodiments of the present disclosure.

Referring to FIG. 13, in operation S1200, the device 1000 may recognize handwritten characters input to the device 1000. The device 1000 may distinguish the handwritten characters input to the device 1000 from one another. When the input handwritten characters partially overlap with each other, the device 1000 may remove the overlapping portions from the input handwritten characters and distinguish resultant handwritten characters from each other. The device 1000 may identify the types of the input handwritten characters and distinguish the handwritten characters from one another. The handwritten characters may be input by a user, and letter spacing of the handwritten characters may not be uniform and the handwritten characters may not be aligned.

In operation S1210, the device 1000 may identify paragraphs formed by the recognized handwritten characters. The device 1000 may identify the paragraphs formed by the recognized handwritten characters by grouping the handwritten characters, based on interline spacing of the handwritten characters and bullets preceding the handwritten characters.

In operation S1220, the device 1000 may adjust interline spacing of the handwritten characters. The device 1000 may adjust the interline spacing of handwritten characters included in each paragraph, based on a height of the paragraph. For example, the device 1000 may adjust the interline spacing of handwritten characters such that the handwritten characters has a uniform interline spacing while being included in a paragraph. In this case, the device 1000 may amend the height of the paragraph and adjust the interline spacing of the handwritten characters based on the amended height of the paragraph.

In operation S1230, the device 1000 may adjust an indentation of the handwritten characters. The device 1000 may adjust the indentation of the handwritten characters, based on paragraph numbers or bullets preceding the handwritten characters. For example, indentations of lines numbered with paragraph numbers "1", "2", and the like, preceding handwritten characters may be set to be one character, and indentations of lines marked with a paragraph symbol (or bullet) "-" preceding handwritten characters may be set to be two characters.

In operation S1240, the device 1000 may change a location of a drawing input by a user. The user may make a drawing when handwriting letters, and the device 1000 may change a location of the drawing while aligning the handwritten letters. In this case, the device 1000 may change the location of the drawing, according to the location and size of a blank area not occupied by the aligned handwritten characters.

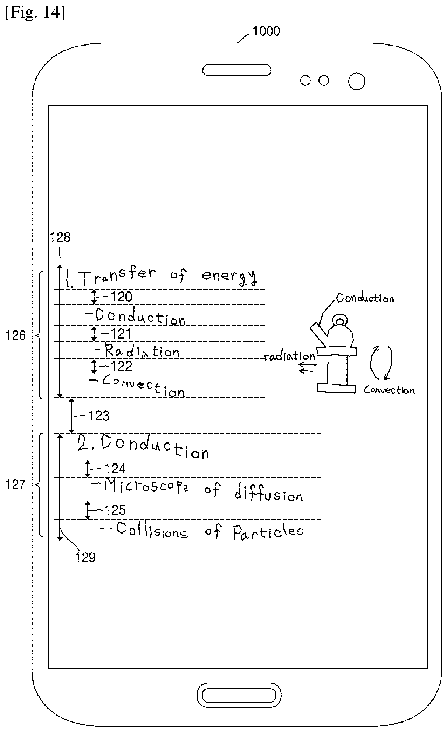

FIG. 14 illustrates a device changing interline spacing according to various embodiments of the present disclosure.

Referring to FIG. 14, the device 1000 may measure interline spaces 120, 121, 122, 123, 124, and 125 of the handwritten characters. The device 1000 may compare the sizes of the measured interline spaces 120, 121, 122, 123, 124, and 125 with one another. The device 1000 may determine that the interline space 123 is greater by a preset error range or more than the interline spaces 120, 121, 122, 124, and 125. Accordingly, the device 1000 may classify the handwritten characters into handwritten characters belonging to a first paragraph 126 and handwritten characters belonging to a second paragraph 127.

The device 1000 may adjust the interline spaces 120, 121, and 122 of the handwritten characters belonging to the first paragraph 126, based on a height 128 of the first paragraph 126. The device 1000 may adjust the interline spaces 120, 121, and 122 of the handwritten characters belonging to the first paragraph 126 such that the interline spaces 120, 121, and 122 are equal to one another.

The device 1000 may adjust the interline spaces 124 and 125 of the handwritten characters belonging to the second paragraph 127, based on a height 129 of the second paragraph 127. The device 1000 may adjust the interline spaces 124 and 125 of the handwritten characters belonging to the second paragraph 127 such that the interline spaces 124 and 125 are equal to each another.

The device 1000 may change the height 128 of the first paragraph 126 and the height 129 of the second paragraph 127 before adjusting the interline spaces 120, 121, 122, 123, 124, and 125. In this case, the device 1000 may change the height 128 of the first paragraph 126 and the height 129 of the second paragraph 127 according to a preset criterion, based on the location and size of an area occupied by the handwritten characters on the screen of the device 1000.

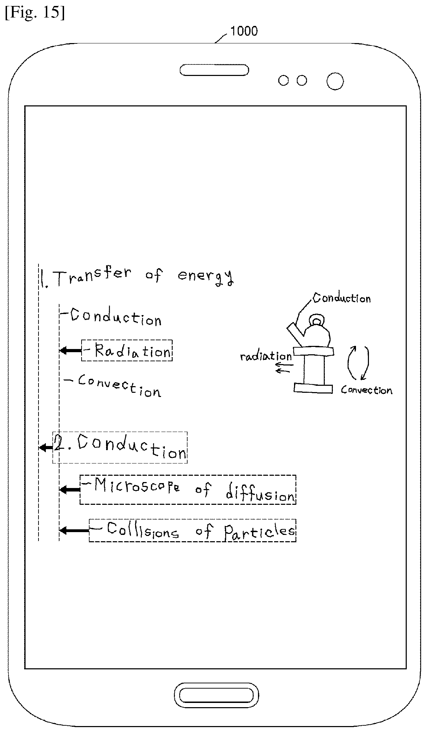

FIG. 15 illustrates device changing an indentation according to various embodiments of the present disclosure.

Referring to FIG. 15, the device 1000 may distinguish a paragraph number of handwritten characters from a bullet of the handwritten characters. For example, the device 1000 may identify a paragraph number "1" from "1. Transfer of energy" and a bullet "2" from "2. Conduction". The device 1000 may adjust indentations such that an indentation of "1. Transfer of energy" is equal to an indentation of "2. Conduction".

For example, the device 1000 may identify bullets "-" from "-Conduction", "-Radiation", "-Convection", "-Microscope of diffusion", and "-Collisions of Particles". The device 1000 may adjust indentations such that indentations of "-Conduction", "-Radiation", "-Convection", "-Microscope of diffusion", and "-Collisions of Particles" are equal to one another.

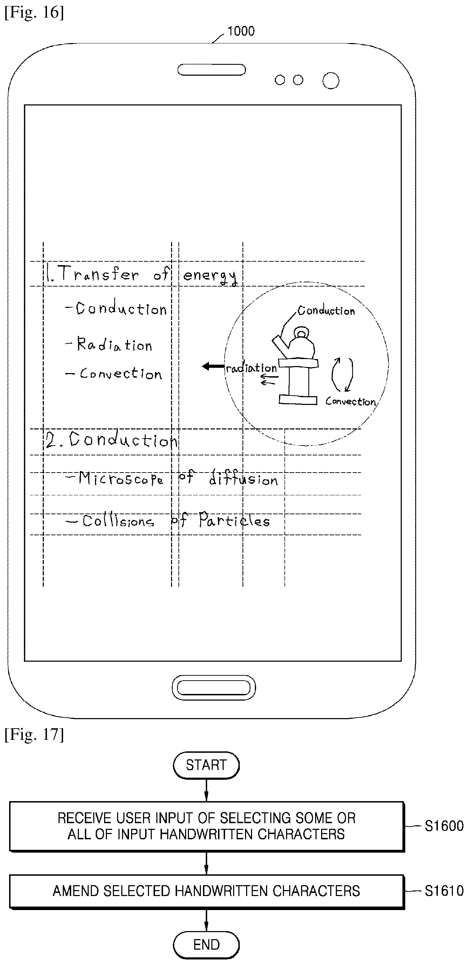

FIG. 16 is a flowchart of a method, performed by a device, of changing a location of a drawing, according to various embodiments of the present disclosure.

Referring to FIG. 16, the device 1000 may identify an area on the screen thereof that is occupied by handwritten characters, and change a location of a drawing based on the location and size of the area occupied by the handwritten characters. The device 1000 may analyze a layout of a page on which the handwritten characters have been recorded, thereby distinguishing characters, drawings, tables, and formulas included in the page having handwritten characters recorded thereon from one another. The device 1000 may calculate relative locations between the characters, the drawings, the tables, and the formulas and move the locations of the characters, the drawings, the tables, and the formulas to optimal locations easily readable by a user, based on a result of the calculation.

For example, the device 1000 may respectively identify areas occupied by lines of handwritten characters, and change the location of a drawing according to a preset criterion based on the identified areas. The device 1000 may enlarge or shrink the size of the drawing. However, various embodiments are not limited thereto.

FIG. 17 is a flowchart of a method, performed by a device, of amending handwritten characters included in an area selected by a user from among handwritten characters input to the device, according to various embodiments of the present disclosure.

Referring to FIG. 17, in operation S1600, the device 1000 may receive a user input of selecting some or all of the input handwritten characters. The user input of selecting some or all of the input handwritten characters may include, for example, a line selection input of underlining and selecting some of the input handwritten characters, and a box selection input of selecting a rectangular area including some of the input handwritten characters. However, various embodiments are not limited thereto. In this case, the device 1000 may receive a certain user input and enter a mode for editing a handwritten character. For example, when a handwritten character is being displayed, the device 1000 may enter a mode for editing handwritten characters, by receiving a user input of pressing a specific button on the device 1000 or a touch input of drawing a specific pattern. In the mode for editing handwritten characters, the device 1000 may receive a user input of selecting some of the input handwritten characters. In a mode for inputting handwritten characters, the device 1000 may display a certain user interface (UI) through which a user may select some or all of the input handwritten characters. Information used to guide selection by the user may be included in the displayed UI.

In operation S1610, the device 1000 may amend the selected handwritten characters. The device 1000 may amend the selected handwritten characters in units of lines or in units of paragraphs according to whether the selected handwritten characters form a single line or a plurality of lines.

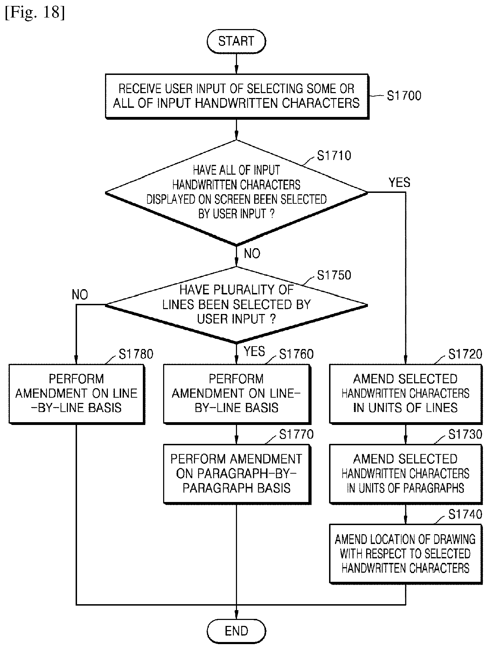

FIG. 18 is a flowchart of a method, performed by a device, of amending selected handwritten characters according to a way in which some from among handwritten characters input to the device are selected, according to various embodiments of the present disclosure.

Referring to FIG. 18, in operation S1700, the device 1000 may receive a user input of selecting some or all of the input handwritten characters. For example, the device 1000 may receive a user line input of underlining and selecting some of input handwritten characters included in a specific line. For example, the device 1000 may receive a user box input of indicating a specific area of the screen to select handwritten characters that form a plurality of lines. For example, the device 1000 may receive a user box input of selecting the entire area of the screen to select all of the handwritten characters displayed on the screen. However, various embodiments are not limited thereto.

In operation S1710, the device 1000 may determine whether all of the input handwritten characters displayed on the screen have been selected by the user input.

When it is determined in operation S1710 that all of the handwritten characters have been selected, operations S1720, S1730, and S1740 may be performed.

In operation S1720, the device 1000 may amend the selected handwritten characters in units of lines. The device 1000 may align the handwritten characters included in each line. The device 1000 may adjust the alignment and letter spacing of the handwritten characters included in a specific line. The device 1000 may adjust the sizes and horizontal widths of the handwritten characters and adjust the thicknesses of the handwritten characters. The device 1000 may adjust word spacing between words formed by the handwritten characters.

In operation S1730, the device 1000 may amend the selected handwritten characters in units of paragraphs. The device 1000 may adjust indentations of lines formed by the handwritten characters, adjust heights of paragraphs formed by the handwritten characters, and adjust spaces between the lines formed by the handwritten characters.

In operation S1740, the device 1000 may amend a location of a drawing with respect to the selected handwritten characters. The device 1000 may identify an area not occupied by the handwritten characters aligned in operations S1720 and S1730 from the entire area of the screen of the device 1000, and change the location of a drawing input by a user. In this case, the device 1000 may enlarge or shrink the size of the drawing.

On the other hand, when it is determined in operation S1710 that some of the handwritten characters have been selected, the device 1000 may determine whether a plurality of lines have been selected by the user input, in operation S1750. The device 1000 may determine whether the handwritten characters selected by the user input are written in a plurality of lines.

When it is determined in operation S1750 that a plurality of lines have been selected, the device 1000 may perform amendment on a line-by-line basis in operation S1760 and perform amendment on a paragraph-by-paragraph basis in operation S1770.

On the other hand, when it is determined in operation S1750 that handwritten characters within a single line have been selected, the device 1000 may perform amendment on a line-by-line basis in operation S 1780. If some handwritten characters among handwritten characters within a single line are selected, the device 1000 may perform amendment on a character-by-character basis.

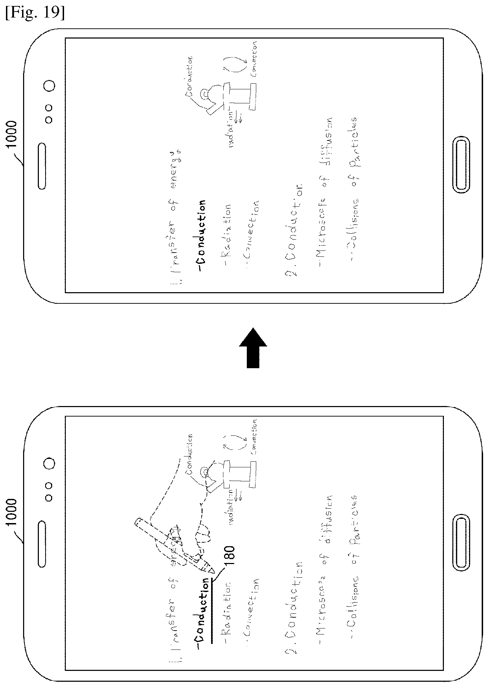

FIG. 19 illustrates a device receiving a line selection input from a user of the device and performing line-by-line amendment on selected handwritten characters according to various embodiments of the present disclosure.

Referring to FIG. 19, the user of the device 1000 may underline "Conduction" 180 from among handwritten characters displayed on the screen of the device 1000. The device 1000 may identify that the handwritten characters "Conduction" 180 selected by the user input are included in a single line. The device 1000 may adjust the alignment, letter spacing, sizes, and horizontal widths of the selected handwritten characters "Conduction" 180 within the single line.

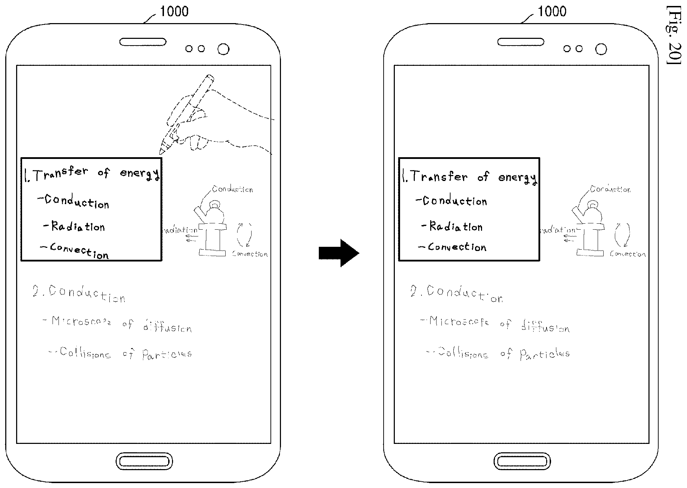

FIG. 20 illustrates a device receiving a box selection input from a user of the device and amending selected handwritten characters according to various embodiments of the present disclosure.

Referring to FIG. 20, the user of the device 1000 may draw a box to select "1.Transfer of energy", "-Conduction", "-Radiation", and "-Convection" from among handwritten characters displayed on the screen of the device 1000. The device 1000 may perform line-by-line amendment and paragraph-by-paragraph amendment on the handwritten characters selected by the user input. The device 1000 may adjust the alignment, letter spacing, sizes, and horizontal widths of the selected handwritten characters "1.Transfer of energy", "-Conduction", "-Radiation", and "-Convection" within the lines included in the box. The device 1000 may also adjust the interline spacing and indentations of handwritten characters "1.Transfer of energy", "-Conduction", "-Radiation", and "-Convection" that have been amended in units of lines.

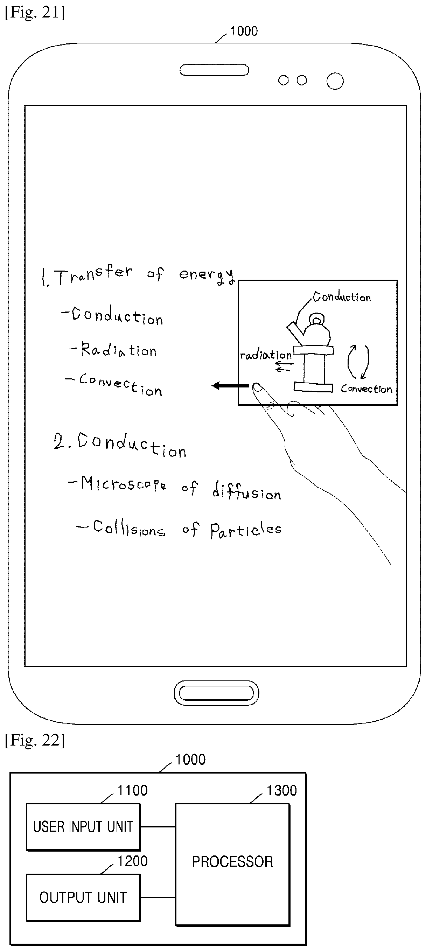

FIG. 21 illustrates a device selecting a drawing and changing the location of the drawing according to a user input according to various embodiments of the present disclosure.

Referring to FIG. 21, the device 1000 may receive a user input of selecting a drawing close to handwritten characters, and move the drawing selected according to the user input.

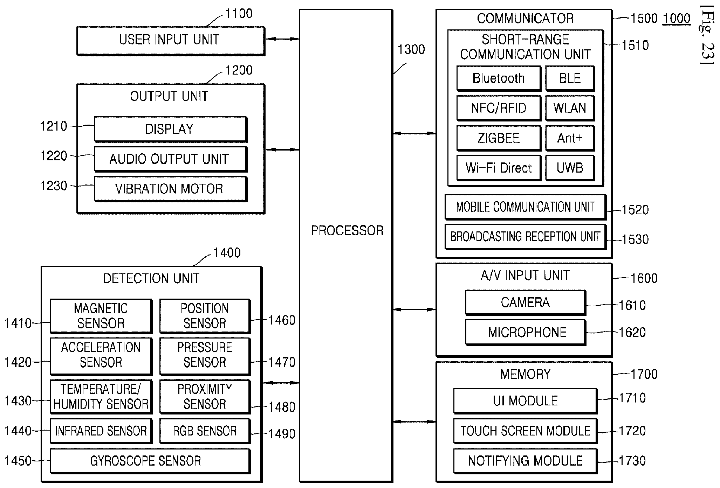

FIGS. 22 and 23 are block diagrams of a device according to various embodiments of the present disclosure.

Referring to FIG. 22, a first device 1000 may include a user input unit 1100, an output unit 1200, and a processor 1300. Not all of the components illustrated in FIG. 22 are essential components of the first device 1000. More or less components than those illustrated in FIG. 22 may constitute the first device 1000.

For example, referring to FIG. 23, the first device 1000 may further include a detection unit 1400, a communicator 1500, an audio/video (A/V) input unit 1600, and a memory 1700, in addition to the user input unit 1100, the output unit 1200, and the processor 1300.

The user input unit 1100 denotes a unit through which a user inputs data for controlling the first device 1000. For example, the user input unit 1100 may be, but is not limited to, a key pad, a dome switch, a touch pad (e.g., a capacitive overlay type, a resistive overlay type, an infrared beam type, an integral strain gauge type, a surface acoustic wave type, a piezo electric type, and the like), a jog wheel, or a jog switch.

The user input unit 1100 may receive a user input of inputting handwritten characters, and a user input of selecting some or all of input handwritten characters.

The output unit 1200 may output an audio signal, a video signal, or a vibration signal, and may include a display 1210, an audio output unit 1220, and a vibration motor 1230.

The display 1210 displays information that is processed by the first device 1000. For example, the display 1210 may display handwritten characters input by a user, and display handwritten characters amended by the processor 1300, which will be described below.

When the display 1210 forms a layer structure together with a touch pad to construct a touch screen, the display 1210 may be used as an input device as well as an output device. The display 1210 may include at least one of a liquid crystal display (LCD), a thin film transistor-LCD (TFT-LCD), an organic light-emitting diode (OLED), a flexible display, a three dimensional (3D) display, and an electrophoretic display. According to various embodiments of the first device 1000, the first device 1000 may include at least two displays 1210. The at least two displays 1210 may be disposed to face each other by using a hinge.

The audio output unit 1220 outputs audio data that is received from the communicator 1500 or stored in the memory 1700. The audio output unit 1220 also outputs an audio signal (e.g., a call signal receiving sound, a message receiving sound, a notification sound, and the like) related with a function of the first device 1000. The audio output unit 1220 may include, for example, a speaker and a buzzer.

The vibration motor 123 may output a vibration signal. For example, the vibration motor 1230 may output a vibration signal corresponding to an output of audio data or video data (e.g., a call signal receiving sound or a message receiving sound). The vibration motor 1230 may also output a vibration signal when a touch screen is touched.

The processor 1300 may typically perform a function of the device 1000 of FIGS. 1-20, by controlling all operations of the first device 1000. For example, the processor 1300 may control the user input unit 1100, the output unit 1200, the detection unit 1400, the communicator 1500, the A/V input unit 1600, and the like, by executing programs stored in the memory 1700.

More particularly, the device 1300 may align handwritten characters input to the device 1000. The processor 1300 may recognize the handwritten characters input to the device 1000. The processor 1300 may distinguish the handwritten characters input to the device 1000 from one another. When the input handwritten characters partially overlap with each other, the processor 1300 may remove the overlapping portions from the input handwritten characters and distinguish resultant handwritten characters from each other. The processor 1300 may identify the types of the input handwritten characters and distinguish the handwritten characters from one another. The handwritten characters may be input by a user, and letter spacing of the handwritten characters may not be uniform and the handwritten characters may not be aligned.

The processor 1300 may determine reference points of the recognized handwritten characters. The processor 1300 may determine a block area of a recognized handwritten character and determine a center point of the determined block area as a reference point of the recognized handwritten character. Alternatively, the processor 1300 may calculate a center of gravity of a recognized handwritten character and determine, as a reference point of the recognized handwritten character, a point where the calculated center of gravity is positioned.

The processor 1300 may align the handwritten characters, based on the locations of the reference points of the handwritten characters. The processor 1300 may determine a font that is similar to that of the handwritten characters, and determine electronic characters that have the determined font and have the same character values as the handwritten characters. The electronic characters may be, for example, characters that are the same as characters that are input through a keyboard of the device 1000 and displayed on the screen of the device 1000. The sizes, horizontal widths, letter spacing, interline spacing, and alignment of the electronic characters may be uniform.

The processor 1300 may align the handwritten characters by comparing reference points of the electronic characters with the reference points of the handwritten characters. The processor 1300 may change the locations of the reference points of the handwritten characters such that the locations of the reference points of the handwritten characters are the same as locations of reference points of the electronic characters when the electronic characters are aligned.

The processor 1300 may change the sizes, horizontal widths, and thicknesses of the handwritten characters and align the handwritten characters. The processor 1300 may change the sizes of the handwritten characters. Since the handwritten characters have been input by a user, the sizes of the handwritten characters may not be uniform. Accordingly, the processor 1300 may uniformly change the sizes of the handwritten characters according to a preset criterion. In this case, the processor 1300 may enlarge or shrink the handwritten characters, based on the sizes of electronic characters having a font that is similar to that of the handwritten characters.

The processor 1300 may change the horizontal widths of the handwritten characters. The processor 1300 may change the horizontal widths of enlarged or shrunk handwritten characters by comparing the enlarged or shrunk handwritten characters with electronic characters corresponding to the handwritten characters. For example, the processor 1300 may change the size of a horizontal width of a handwritten character such that a ratio of the horizontal width of the handwritten character to a height thereof is identical with a ratio of a horizontal width of an electronic character corresponding to the handwritten character to a height thereof.

Although a case where the processor 1300 changes the size of a handwritten character and changes the horizontal width of the handwritten character has been described above, various embodiments are not limited thereto. The processor 1300 may change the horizontal width of the handwritten character while enlarging or shrinking the handwritten character.

The processor 1300 may change the thicknesses of the handwritten characters. As the sizes or horizontal widths of the handwritten characters are changed, the stroke thicknesses of the handwritten characters may be changed. Accordingly, the processor 1300 may change the thicknesses of the handwriting characters to be uniform. In this case, various criteria may be set to change the thicknesses of the handwritten characters. For example, the processor 1300 may calculate an average value of the thicknesses of the handwritten characters whose sizes or horizontal widths have not yet been changed, and change the thicknesses of the handwritten characters whose sizes or horizontal widths have been changed, according to the calculated average value. Alternatively, the processor 1300 may calculate an average value of the thicknesses of the handwritten characters whose sizes or horizontal widths have been changed, and change the thicknesses of the handwritten characters whose sizes or horizontal widths have been changed, according to the calculated average value. However, various embodiments are not limited thereto, and the processor 1300 may adjust the thicknesses of the handwritten characters in consideration of, for example, the sizes of the handwritten characters, interline spacing thereof, and the size of a paragraph.

The processor 1300 may determine reference points of the handwritten characters whose sizes, horizontal widths, and thicknesses have been changed, and acquire electronic characters corresponding to the handwritten characters whose sizes, horizontal widths, and thicknesses have been changed. The processor 1300 may align the handwritten characters whose sizes, horizontal widths, and thicknesses have been changed, by comparing the reference points of the acquired electronic characters with the determined reference points of the handwritten characters whose sizes, horizontal widths, and thicknesses have been changed.

The processor 1300 may change interline spacing and indentations within a paragraph and change a location of a drawing. The processor 1300 may identify paragraphs formed by the handwritten characters. The processor 1300 may identify the paragraphs formed by the recognized handwritten characters by grouping the handwritten characters, based on interline spacing of the handwritten characters and paragraph numbering preceding the handwritten characters.

The processor 1300 may adjust interline spacing of the handwritten characters. The processor 1300 may adjust the interline spacing of handwritten characters included in each paragraph, based on a height of the paragraph. For example, the processor 1300 may adjust the interline spacing of handwritten characters such that the handwritten characters has a uniform interline spacing while being included in a paragraph. In this case, the processor 1300 may amend the height of the paragraph and adjust the interline spacing of the handwritten characters based on the amended height of the paragraph.

The processor 1300 may adjust an indentation of the handwritten characters. The processor 1300 may adjust the indentation of the handwritten characters, based on paragraph numbering or bullets of lines including the handwritten characters. For example, indentations of lines numbered with paragraph numbers "1", "2", and the like, may be set to be one character, and indentations of lines marked with a paragraph symbol (or bullet) "-" may be set to be two characters.

The processor 1300 may change a location of a drawing input by a user. The user may draw a picture when writing letters, and the processor 1300 may change a location of the picture while aligning the handwritten letters. In this case, the processor 1300 may change the location of the drawing, according to the location and size of a blank area not occupied by the aligned handwritten characters.

The processor 1300 may amend handwritten characters included in an area selected by the user from among the handwritten characters input to the device 1000.

The processor 1300 may receive a user input of selecting some or all of the input handwritten characters, through the user input unit 1100. The user input of selecting some or all of the input handwritten characters may include, for example, a line selection input of underlining and selecting some of the input handwritten characters, and a box selection input of selecting a rectangular area including some of the input handwritten characters. However, various embodiments are not limited thereto.

The processor 1300 may amend the selected handwritten characters. The processor 1300 may amend the selected handwritten characters in units of lines or in units of paragraphs according to whether the selected handwritten characters form a single line or a plurality of lines.

The detection unit 1400 may detect the status of the first device 1000 or the status of the surrounding area of the first device 1000 and may transmit information corresponding to the detected status to the processor 1300.

The detection unit 1400 may include, but is not limited thereto, at least one selected from a magnetic sensor 1410, an acceleration sensor 1420, a temperature/humidity sensor 1430, an infrared sensor 1440, a gyroscope sensor 1450, a position sensor (e.g., a GPS) 1460, a pressure sensor 1470, a proximity sensor 1480, and a red, green, and blue (RGB) sensor 1490 (i.e., an illumination sensor). Functions of most of the sensors would be instinctively understood by one of ordinary skill in the art in view of their names and thus detailed descriptions thereof will be omitted herein.

The communicator 1500 may include at least one component that enables communication between the first device 1000 and an external device (not shown). For example, the communicator 1500 may include a short-range wireless communication unit 1510, a mobile communication unit 1520, and a broadcasting reception unit 1530.

The short-range wireless communication unit 151 may include, but is not limited to, a Bluetooth communicator, a Bluetooth low energy (BLE) communicator, a near field communication (NFC) unit, a wireless local area network (WLAN) (e.g., Wi-Fi) communicator, a ZigBee communicator, an infrared data association (IrDA) communicator, a Wi-Fi direct (WFD) communicator, an ultra-wideband (UWB) communicator, an Ant+ communicator, and the like.

The mobile communication unit 1520 may exchange a wireless signal with at least one selected from a base station, an external terminal, and a server on a mobile communication network. Examples of the wireless signal may include a voice call signal, a video call signal, and various types of data generated during a short message service (SMS)/multimedia messaging service (MMS).

The broadcasting reception unit 1530 receives a broadcasting signal and/or broadcasting-related information from an external source through a broadcasting channel. The broadcasting channel may be a satellite channel, a ground wave channel, and the like. According to various embodiments, the first device 1000 may not include the broadcasting reception unit 1530.

The communicator 1500 may transmit or receive, to or from the external device, information necessary for amending the handwritten characters.

The A/V input unit 1600 inputs an audio signal or a video signal, and may include, for example, a camera 1610 and a microphone 1620. The camera 1610 may acquire an image frame, such as a still image or a moving picture, through an image sensor in a video call mode or a photography mode. An image captured through the image sensor may be processed by the processor 1300 or a separate image processor (not shown).

The image frame obtained by the camera 1610 may be stored in the memory 1700 or transmitted to the outside through the communicator 1500. At least two cameras 1610 may be included according to various embodiments of the structure of a terminal.

The microphone 1620 receives an external audio signal and converts the external audio signal into electrical audio data. For example, the microphone 1620 may receive an audio signal from an external device or a speaking person. The microphone 1620 may use various noise removal algorithms in order to remove noise that is generated while receiving the external audio signal.

The memory 1700 may store a program used by the processor 1300 to perform processing and control, and may also store data that is input to or output from the first device 1000.

The memory 1700 may include at least one type of storage medium selected from among a flash memory type, a hard disk type, a multimedia card micro type, a card type memory (e.g., a secure digital (SD) or extreme digital (XD) memory), a random access memory (RAM), a static RAM (SRAM), a read-only memory (ROM), an electrically erasable programmable ROM (EEPROM), a programmable ROM (PROM), a magnetic memory, a magnetic disk, an optical disk, and the like.

The programs stored in the memory 1700 may be classified into a plurality of modules according to their functions, for example, a UI module 1710, a touch screen module 1720, and a notification module 1730.

The UI module 1710 may provide a UI, graphical user interface (GUI), and the like, that is specialized for each application and interoperates with the first device 1000. The touch screen module 1720 may detect a touch gesture on a touch screen of a user and transmit information regarding the touch gesture to the processor 1300. The touch screen module 1720 according to an embodiment may recognize and analyze a touch code. The touch screen module 1720 may be configured by separate hardware including a controller.

In order to detect the actual touch or the proximate touch on the touch pad, the touch screen may internally or externally have various sensors. An example of a sensor used to detect the real touch or the proximity touch on the touch screen is a tactile sensor. The tactile sensor is a sensor that detects a touch by a specific object to a same degree as to which a human feels or more. The tactile sensor may detect various types of information, such as the roughness of a touched surface, the hardness of the touching object, the temperature of a touched point, and the like.

Another example of a sensor used to detect the real touch or the proximity touch on the touch screen is a proximity sensor.

The proximity sensor is a sensor that detects the existence of an object that approaches a certain detection surface or that exists nearby, by using an electromagnetic force or infrared rays, without using any mechanical contact. Examples of the proximity sensor include a transmission-type photoelectric sensor, a direct reflection-type photoelectric sensor, a mirror reflection-type photoelectric sensor, a high frequency oscillation-type proximity sensor, a capacity-type proximity sensor, a magnetic proximity sensor, an infrared-type proximity sensor, and the like. Examples of the touch gesture of the user may include tap, touch and hold, double tap, drag, panning, flick, drag and drop, swipe, and the like.

The notification module 1730 may generate a signal for notifying that an event has been generated in the first device 1000. Examples of the event generated in the first device 1000 may include call signal receiving, message receiving, a key signal input, schedule notification, and the like. The notification module 1730 may output a notification signal in the form of a video signal through the display 1210, in the form of an audio signal through the audio output unit 1220, or in the form of a vibration signal through the vibration motor 1230.

Some or all of the components of the device 1000 shown in FIGS. 22 and 23 may be implemented by at least one hardware processor. For example, the handwritten characters input to the device 1000 may be recognized through a separate processor other than a main processor of the device 1000. Some of the components of the device 1000 shown in FIGS. 22 and 23 may be implemented by at least one software program. For example, some function of the device 1000 may be implemented by an operating system (OS) program, and some other functions thereof may be implemented by an application program. Accordingly, the functions of the device 1000 may be implemented by at least one hardware and at least one software, and functions of the device 1000 that are implemented by software may be executed by an OS and an application provided in the device 1000.

Certain aspects of the present disclosure can also be embodied as computer readable code on a non-transitory computer readable recording medium. A non-transitory computer readable recording medium is any data storage device that can store data which can be thereafter read by a computer system. Examples of the non-transitory computer readable recording medium include a Read-Only Memory (ROM), a Random-Access Memory (RAM), Compact Disc-ROMs (CD-ROMs), magnetic tapes, floppy disks, and optical data storage devices. The non-transitory computer readable recording medium can also be distributed over network coupled computer systems so that the computer readable code is stored and executed in a distributed fashion. In addition, functional programs, code, and code segments for accomplishing the present disclosure can be easily construed by programmers skilled in the art to which the present disclosure pertains.

At this point it should be noted that the various embodiments of the present disclosure as described above typically involve the processing of input data and the generation of output data to some extent. This input data processing and output data generation may be implemented in hardware or software in combination with hardware. For example, specific electronic components may be employed in a mobile device or similar or related circuitry for implementing the functions associated with the various embodiments of the present disclosure as described above. Alternatively, one or more processors operating in accordance with stored instructions may implement the functions associated with the various embodiments of the present disclosure as described above. If such is the case, it is within the scope of the present disclosure that such instructions may be stored on one or more non-transitory processor readable mediums. Examples of the processor readable mediums include a ROM, a RAM, CD-ROMs, magnetic tapes, floppy disks, and optical data storage devices. The processor readable mediums can also be distributed over network coupled computer systems so that the instructions are stored and executed in a distributed fashion. In addition, functional computer programs, instructions, and instruction segments for accomplishing the present disclosure can be easily construed by programmers skilled in the art to which the present disclosure pertains.

The terminology "unit" used herein may be a hardware component, such as a processor or a circuit, and/or a software component that is executed by a hardware component, such as a processor.

Although the various embodiments of the present disclosure have been disclosed for illustrative purposes, one of ordinary skill in the art will appreciate that diverse variations and modifications are possible, without departing from the scope of the disclosure. Thus, the above various embodiments should be understood not to be restrictive but to be illustrative, in all aspects. For example, respective elements described in an integrated form may be dividedly used, and the divided elements may be used in a state of being combined.

The various embodiments should be considered in a descriptive sense only and not for purposes of limitation. Descriptions of features or aspects within each embodiment should typically be considered as available for other similar features or aspects in other embodiments.

While the present disclosure has been shown and described with reference to various embodiments thereof, it will be understood by those skilled in the art that various changes in form and details may be made therein without departing from the scope of the present disclosure as defined by the appended claims.

## Claims

1. A device (1000) for amending handwritten characters, the device comprising:
a user input unit (1100) configured to receive a user input of handwritten characters;
a processor (1300) configured to:
recognize the input as handwritten characters;
determine respective reference points of the recognized handwritten characters;
and align the recognized handwritten characters based on locations of the determined reference points; and
a display (1200) configured to display the aligned handwritten characters;
**characterized in that** the processor is configured to:
determine a font corresponding to the recognized handwritten characters;
determine electronic characters that have the determined font and have the same character values as the recognized handwritten characters;
acquire an array of reference points of the electronic characters by lining up the electronic characters;
and align the recognized handwritten characters by changing their locations such that an array of their reference points is identical with an array of the reference points of the lined up electronic characters.

2. The device of claim 1, wherein the processor (1300) is further configured to:
determine block areas respectively corresponding to the recognized handwritten characters, and
determine center points of the determined block areas as the reference points.

3. The device of claim 1, wherein the processor (1300) is further configured to determine the reference points by calculating respective centers of gravity of the recognized handwritten characters.

4. The device of claim 1,
wherein the user input unit (1100) is further configured to receive a user input of selecting some of the handwritten characters, and
wherein the processor is further configured to align the handwritten characters selected by the user.

5. The device of claim 1, wherein the processor (1300) is further configured to recognize the handwritten characters by identifying strokes that constitute the handwritten characters.

6. A method, performed by a device (1000), of amending handwritten characters, the method comprising:
recognizing as handwritten characters an input to the device;
determining respective reference points of the recognized handwritten characters; and
aligning the recognized handwritten characters, based on locations of the determined reference points;
**characterized in that** the method comprises:
determining a font corresponding to the recognized handwritten characters;
determining electronic characters that have the determined font and have the same character values as the recognized handwritten characters;
acquiring an array of reference points of the electronic characters by lining up the electronic characters;
and aligning the recognized handwritten characters by changing their locations such that an array of their reference points is identical with an array of the reference points of the lined up electronic characters.

7. At least one non-transitory computer-readable recording medium comprising instructions which, when executed by a computer, cause the computer to perform the method of claim 6.

## Patentansprüche

1. Eine Vorrichtung (1000) zum Berichtigen von handgeschriebenen Zeichen, wobei die Vorrichtung aufweist:
eine Benutzer-Eingabeeinheit (1100), die konfiguriert ist, um eine Benutzereingabe handgeschriebener Zeichen zu erhalten;
einen Prozessor (1300), der konfiguriert ist, um:
die Eingabe als handgeschriebene Zeichen zu erkennen;
jeweilige Bezugspunkte der erkannten handgeschriebenen Zeichen zu bestimmen;
und die erkannten handgeschriebenen Zeichen basierend auf Positionen der bestimmten Bezugspunkte auszurichten; und
eine Anzeige (1200), die konfiguriert ist, um die ausgerichteten handgeschriebenen Zeichen anzuzeigen;
**dadurch gekennzeichnet, dass** der Prozessor konfiguriert ist, um:
eine Schriftart entsprechend den erkannten handgeschriebenen Zeichen zu bestimmen;
elektronische Zeichen, die die bestimmte Schriftart aufweisen und dieselben Zeichenwerte wie die erkannten handgeschriebenen Zeichen aufweisen, zu bestimmen;
eine Anordnung von Bezugspunkten der elektronischen Zeichen durch Aufreihen der elektronischen Zeichen zu erhalten;
und die erkannten handgeschriebenen Zeichen durch Ändern ihrer Positionen derart, dass eine Anordnung ihrer Bezugspunkte identisch mit einer Anordnung der Bezugspunkte der aufgereihten elektronischen Zeichen ist, auszurichten.

2. Die Vorrichtung nach Anspruch 1, wobei der Prozessor (1300) ferner konfiguriert ist, um:
Blockbereiche jeweils entsprechend den erkannten handgeschriebenen Zeichen zu bestimmen, und
Mittelpunkte der bestimmten Blockbereiche als die Bezugspunkte zu bestimmen.

3. Die Vorrichtung nach Anspruch 1, wobei der Prozessor (1300) ferner konfiguriert ist, um die Bezugspunkte durch Berechnen jeweiliger Schwerpunkte der erkannten handgeschriebenen Zeichen zu bestimmen.

4. Die Vorrichtung nach Anspruch 1,
wobei die Benutzer-Eingabeeinheit (1100) ferner konfiguriert ist, um eine Benutzereingabe des Auswählens einiger der handgeschriebenen Zeichen zu erhalten, und
wobei der Prozessor ferner konfiguriert ist, um die vom Benutzer ausgewählten handgeschriebenen Zeichen auszurichten.

5. Die Vorrichtung nach Anspruch 1, wobei der Prozessor (1300) ferner konfiguriert ist, um die handgeschriebenen Zeichen durch Identifizieren von Strichen, die die handgeschriebenen Zeichen bilden, zu erkennen.

6. Ein von einer Vorrichtung (1000) durchgeführtes Verfahren zum Berichtigen von handgeschriebenen Zeichen, wobei das Verfahren aufweist:
Erkennen einer Eingabe in die Vorrichtung als handgeschriebene Zeichen;
Bestimmen jeweiliger Bezugspunkte der erkannten handgeschriebenen Zeichen; und
Ausrichten der erkannten handgeschriebenen Zeichen basierend auf Positionen der bestimmten Bezugspunkte;
**dadurch gekennzeichnet, dass** das Verfahren aufweist:
Bestimmen einer Schriftart entsprechend den erkannten handgeschriebenen Zeichen;
Bestimmen elektronischer Zeichen, die die bestimmte Schriftart aufweisen und dieselben Zeichenwerte wie die erkannten handgeschriebenen Zeichen aufweisen;
Erhalten einer Anordnung von Bezugspunkten der elektronischen Zeichen durch Aufreihen der elektronischen Zeichen;
und Ausrichten der erkannten handgeschriebenen Zeichen durch Ändern ihrer Positionen derart, dass eine Anordnung ihrer Bezugspunkte identisch mit einer Anordnung der Bezugspunkte der aufgereihten elektronischen Zeichen ist.

7. Zumindest ein nicht-flüchtiges computerlesbares Aufzeichnungsmedium, aufweisend Befehle, die, wenn sie von einem Computer ausgeführt werden, bewirken, dass der Computer das Verfahren nach Anspruch 6 durchführt.

## Revendications

1. Un dispositif (1000) pour modifier des caractères manuscrits, le dispositif comprenant:
une unité d'entrée utilisateur (1100) configurée pour recevoir une entrée utilisateur de caractères manuscrits ;
un processeur (1300) configuré pour :
reconnaître l'entrée comme des caractères manuscrits ;
déterminer des points de référence respectifs des caractères manuscrits reconnus,
et aligner les caractères manuscrits reconnus sur la base d'emplacements des points de référence déterminés, et
un affichage (1200) configuré pour afficher les caractères manuscrits alignés ;
**caractérisé en ce que** le processeur est configuré pour :
déterminer une police de caractères correspondant aux caractères manuscrits reconnus ;
déterminer des caractères électroniques qui ont la police de caractères déterminée et ont les mêmes valeurs de caractère comme des caractères manuscrits reconnus ;
acquérir un réseau de points de référence des caractères électroniques en alignant les caractères électroniques ;
et aligner les caractères manuscrits reconnus en changeant leurs emplacements de telle manière qu'un réseau de leurs points de référence soit identique à un réseau des points de référence des caractères électroniques alignés.

2. Le dispositif selon la revendication 1, dans lequel le processeur (1300) est configuré en outre pour :
déterminer des zones de bloc correspondant respectivement aux caractères manuscrits reconnus, et
déterminer des points de centre des zones de bloc déterminées comme des points de référence.

3. Le dispositif selon la revendication 1, dans lequel le processeur (1300) est configuré en outre pour déterminer les points de référence en calculant des centres de gravité respectifs des caractères manuscrits reconnus.

4. Le dispositif selon la revendication 1,
dans lequel l'unité d'entrée utilisateur (1100) est configurée en outre pour recevoir une entrée utilisateur de sélectionner quelques-uns des caractères manuscrits, et
le processeur étant configuré en outre pour aligner les caractères manuscrits sélectionnés par l'utilisateur.

5. Le dispositif selon la revendication 1, dans lequel le processeur (1300) est configuré en outre pour reconnaître les caractères manuscrits en identifiant des traits qui constituent les caractères manuscrits.

6. Un procédé, effectué par un dispositif (1000), pour modifier des caractères manuscrits, le procédé comprenant :
reconnaître une entrée dans le dispositif comme des caractères manuscrits ;
déterminer des points de référence respectifs des caractères manuscrits reconnus ; et
aligner les caractères manuscrits reconnus sur la base d'emplacements des points de référence déterminés ;
**caractérisé en ce que** le procédé comprend :
déterminer une police de caractères correspondant aux caractères manuscrits reconnus ;
déterminer des caractères électroniques qui ont la police de caractères déterminée et ont les mêmes valeurs de caractère comme les caractères manuscrits reconnus ;
acquérir un réseau de points de référence des caractères électroniques en alignant les caractères électroniques ;
et aligner les caractères manuscrits reconnus en changeant leurs emplacements de telle manière qu'un réseau de leurs points de référence est identique à un réseau des points de référence des caractères électroniques alignés.

7. Au moins un support d'enregistrement lisible par ordinateur non transitoire, comprenant des instructions qui, lorsqu'elles sont effectuées par un ordinateur, amènent l'ordinateur à effectuer le procédé selon la revendication 6.
